# FASCICULE DE BREVET EUROPEEN

(11) **EP 1 400 407 B1**
(45) Date de publication et mention de la délivrance du brevet: **04.10.2006**
(21) Numéro de dépôt: 03292272.6
(22) Date de dépôt: 15.09.2003
(51) Int. Cl.: B60Q 1/04

(54) **Projecteur de véhicule automobile comportant un organe d'impact**
Kfz-Scheinwerfer mit einem Aufprall-Teil
Vehicle headlamp with an impact part

(30) Priorité: 20.09.2002 FR 0211709
(43) Date de publication de la demande: 24.03.2004
(73) Titulaire: VALEO VISION, 93012 Bobigny Cédex (FR)
(72) Inventeur: Arlon, Philippe, 93012 Bobigny Cédex (FR); Harand, Pascal, 78321 La Verriere Cédex (FR); Marechal, Laurence, 78321 La Verriere Cédex (FR); Boumaza, François, 78321 La Verriere Cédex (FR)
(74) Mandataire: Renous Chan, Véronique

(56) Documents cités:
- DE-A- 10 020 658
- DE-A- 10 036 992
- DE-A- 19 944 670
- US-B1- 6 416 093
- PATENT ABSTRACTS OF JAPAN vol. 2002, no. 03, 3 avril 2002 (2002-04-03) & JP 2001 315599 A (MAZDA MOTOR CORP), 13 novembre 2001 (2001-11-13)
- PATENT ABSTRACTS OF JAPAN vol. 2000, no. 20, 10 juillet 2001 (2001-07-10) & JP 2001 063499 A (NISSAN MOTOR CO LTD), 13 mars 2001 (2001-03-13)

## Description

L'invention concerne un projecteur de véhicule automobile.

Comme on le sait, les projecteurs jouent, par leur localisation, un grand rôle dans la sécurité passive des véhicules automobiles.

Les premiers concernés par les progrès réalisés dans la conception des projecteurs sont les piétons dont les chocs avec les véhicules sont extrêmement fréquents. Bien que la plupart des accidents aient lieu en ville, c'est-à-dire à vitesse réduite (inférieure à 40 km/h), les lésions subies par les piétons peuvent avoir des conséquences désastreuses.

Le choc piéton comporte généralement au moins deux phases. Dans un premier temps, le piéton heurte le bouclier et/ou le projecteur. Dans un deuxième temps, il vient heurter le capot.

Dans ce qui va suivre, nous nous intéresserons à la première phase, où le piéton vient heurter le projecteur.

Dans le cas d'un piéton adulte de taille moyenne, la partie du corps venant directement au contact du projecteur est la hanche, ce qui peut avoir des conséquences graves sur le fonctionnement des membres inférieurs. Ainsi dénombre-t-on de nombreux cas d'hémiplégie.

Dans le cas d'un piéton enfant, c'est par sa tête qu'il vient heurter le projecteur. Il est inutile de détailler les conséquences qui peuvent s'ensuivre.

Conscients de ces problèmes, les constructeurs ont, depuis un certain temps déjà, proposé des solutions visant à réduire les lésions subies par les personnes en cas de choc piéton.

L'on pourra notamment se référer au brevet français N° FR-2 501 334, ou à son équivalent américain N° US-4,475,148.

L'on pourra également se référer à la demande de brevet allemand publiée sous le numéro DE-100 30 373. Il est aussi connu des brevet US 6,416,093, DE 100 20 658, et DE 100 36 992 un véhicule muni à l'avant de coussins gonflables extérieurs aptes à se déployer en cas de choc. II est connu du brevet DE 199 44 670 un véhicule dont l'avant est déformable en cas de choc afin d'en amortir les conséquences pour les piétons.

Les solutions décrites par ces documents proposent d'interposer, entre le projecteur et la structure du véhicule, des moyens élastiques pour absorber une partie de l'énergie du choc.

Si ces solutions ont pu connaître un certain succès commercial, la sécurité qu'elles garantissent au piéton peut toutefois être améliorée.

En effet, les capacités des projecteurs connus à absorber l'énergie du choc peuvent se révéler insuffisantes. Il faut noter que cette capacité est en général liée à l'espace disponible aux environs du projecteur. Or, compte tenu des exigences de compacité des constructeurs, l'espace disponible est généralement très limité.

Par ailleurs, si le projecteur représente un danger par lui-même pour le piéton, il est à noter que les lésions les plus graves résultent fréquemment d'un choc avec les éléments de carrosserie qui entourent le projecteur, ces éléments présentant en effet des arêtes rigides.

C'est pourquoi les constructeurs hésitent entre une relative souplesse du projecteur afin d'amortir au mieux le choc piéton, et une relative rigidité pour faire du projecteur un rempart protégeant le piéton des éléments de carrosserie environnants.

A ce jour, aucune solution répondant de manière satisfaisante à ces deux critères n'a été proposée.

Il convient également de prendre en compte l'apparition de nouveaux standards extrêmement exigeants en matière de sécurité passive, définis par des organismes tels que l'EEVC (European Enhanced Vehicle-Safety Committee) ou l'Euro NCAP (European New Car Assessment Programme).

L'invention vise notamment à pallier les inconvénients précités des projecteurs connus et à satisfaire aux nouveaux standards de sécurité passive, en proposant un projecteur qui, tout en répondant aux exigences habituelles en termes d'éclairage et d'esthétique, améliore la sécurité des piétons en cas de choc.

A cet effet, l'invention propose un projecteur de véhicule automobile selon les caractéristiques techniques de la revendication 1 ou de la revendication 9.

On entend au sens de l'invention par projecteur, de façon plus générale, tout dispositif d'éclairage et/ou de signalisation pour véhicule.

De la sorte, le choc est anticipé, et la course du projecteur lors du choc est allongée. Il en résulte une plus grande capacité d'absorption d'énergie, et une meilleure protection du piéton contre les éléments de carrosserie environnants, au bénéfice de l'intégrité physique de la personne.

Le dispositif de sécurité peut en outre comporter des moyens pour permettre le déplacement de l'organe d'impact de sa position déployée vers sa position d'utilisation et/ou des moyens pour maîtriser le déplacement de l'organe d'impact de sa position d'utilisation vers sa position déployée, afin d'accroître encore les capacités du projecteur à absorber l'énergie du choc.

Suivant un premier mode de réalisation, le projecteur comporte un boîtier renfermant au moins une source lumineuse et sur lequel est montée une glace de protection apte à transmettre la lumière émise par la source, et l'organe d'impact comporte la glace. C'est en effet celle-ci que le piéton vient heurter le plus directement. La glace est par exemple montée mobile par rapport au boîtier, et le dispositif de sécurité est apte à provoquer le déplacement de la glace par rapport au boîtier.

Ainsi, le dispositif de sécurité peut comporter un manchon expansible sur lequel est montée la glace, le manchon étant monté sur le boîtier et définissant avec celui-ci une chambre d'expansion, le dispositif de sécurité comportant en outre un réservoir de gaz raccordé à la chambre d'expansion et susceptible d'y libérer son gaz pour provoquer l'expansion du manchon et le déplacement de la glace par rapport au boîtier.

En variante, le dispositif de sécurité comporte, d'une part, un vérin solidaire du boîtier et dont le piston est solidaire de la glace, et, d'autre part, un réservoir de gaz raccordé au vérin et susceptible d'y libérer son gaz pour provoquer le déplacement de la glace par rapport au boîtier.

Suivant une autre variante, la glace est déformable et définit, conjointement avec le boîtier, une chambre d'expansion, le dispositif de sécurité comportant un réservoir de gaz raccordé à la chambre d'expansion et susceptible d'y libérer son gaz pour gonfler la glace.

Le boîtier peut être muni d'un évent de décompression dont l'ouverture est régulée par le dispositif de sécurité pour permettre le déplacement de la glace de sa position déployée vers sa position d'utilisation.

Suivant encore une autre variante, la glace est déformable et définit conjointement avec le boîtier une enceinte, et le dispositif de sécurité comporte un coussin gonflable susceptible de se déployer dans cette enceinte pour gonfler la glace.

Suivant un deuxième mode de réalisation, qui ne fait pas partie de la présente invention, le projecteur comporte un boîtier renfermant au moins une source lumineuse et sur lequel est montée une glace de protection apte à transmettre la lumière émise par la source, et l'organe d'impact comporte à la fois le boîtier et la glace.

Dans ce cas, le boîtier étant monté sur le châssis du véhicule, le dispositif de sécurité peut comporter :
- soit, d'une part, une chambre d'expansion définie entre le boîtier et le châssis, et, d'autre part, un réservoir de gaz raccordé à la chambre d'expansion et apte à y libérer son gaz pour provoquer le déplacement du boîtier par rapport au châssis,
- soit, d'une part, un vérin solidaire du boîtier et dont le piston est solidaire du châssis, et, d'autre part, un réservoir de gaz raccordé au vérin et susceptible d'y libérer son gaz pour provoquer le déplacement du boîtier par rapport au châssis.
Suivant un troisième mode de réalisation, qui ne fait pas partie de l'invention, l'organe d'impact comporte un coussin gonflable susceptible de se déployer à l'extérieur du projecteur. Le coussin gonflable est par exemple préformé pour recouvrir au moins partiellement la glace, lorsqu'il se trouve en position déployée.

On comprend dans l'invention par « position d'utilisation » l'état de l'élément considéré quand le projecteur est en fonctionnement normal, quand le véhicule ne subit aucun choc, aucun accident. Et on comprend par « position déployée », la position de l'élément quand le choc se produit.

L'invention sera mieux comprise à la lecture de la description qui va suivre, donnée uniquement à titre d'exemple et faite en se référant aux dessins annexés dans lesquels :
- la figure 1 est une vue partielle en perspective, de devant, d'un véhicule automobile comportant, représenté schématiquement et par transparence en traits interrompus, un dispositif de sécurité destiné à commander le déplacement d'un organe d'impact dont est pourvu chaque projecteur du véhicule ;
- les figures 2 et 3 sont des vues schématiques d'élévation en coupe, de côté, d'un projecteur de véhicule automobile tel que représenté sur la figure 1, où l'organe d'impact est formé par la glace du projecteur, laquelle est montée coulissante sur le boîtier ; à la figure 2 correspond un mode de réalisation où un manchon expansible est interposé entre la glace et le boîtier ; à la figure 3 correspond un mode de réalisation où une partie de la glace forme le piston d'un vérin solidaire du boîtier ;
- la figure 4 est une vue analogue aux figures 2 et 3, où la glace du projecteur est gonflable et où un gaz peut être directement libéré dans l'enceinte formée conjointement par la glace et le boîtier ;
- la figure 5 est une vue analogue à la figure 4, où la glace du projecteur est également gonflable, mais où il est prévu un coussin gonflable susceptible de se déployer dans l'enceinte formée par la glace et le boîtier ;
- la figure 6 qui ne correspond pas à l'invention, est une vue d'élévation en coupe, de côté, d'un projecteur dont le boîtier et la glace forment conjointement un organe d'impact, le boîtier étant monté coulissant par rapport au châssis fixe du véhicule, un organe expansible étant interposé entre le boîtier et le châssis ;
- la figure 7 qui ne correspond pas à l'invention, est une vue analogue à la figure 6, où le boîtier forme un vérin dont le piston est solidaire du châssis, le boîtier étant monté coulissant sur ce dernier ;
- la figure 8 qui ne correspond pas à l'invention, est une vue analogue aux figures 2 à 7, où le projecteur est équipé d'un coussin gonflable susceptible de se déployer à l'extérieur du projecteur en recouvrant sa glace ; qui ne correspond à l'invention ;
- la figure 9 est une vue analogue à la figure 1, sur laquelle est représenté le coussin gonflable de la figure 7, en position déployée où il recouvre le projecteur gauche du véhicule ;
- la figure 10 est une vue analogue à la figure 4, suivant une variante de réalisation où la glace du projecteur est munie de zones fusibles ;
- la figure 10A est une vue de détail du projecteur de la figure 10, suivant l'encart 10A matérialisé en traits mixtes sur cette figure ;
- la figure 10B est une vue de détail du projecteur de la figure 10, suivant l'encart 10B matérialisé en traits mixtes sur cette figure ;
- la figure 11 est une vue analogue à la figure 10, illustrant, en position d'utilisation, une variante de réalisation où la glace est munie de zones de fusibles ;
- la figure 12 est une vue analogue à la figure 11, en position déployée ;

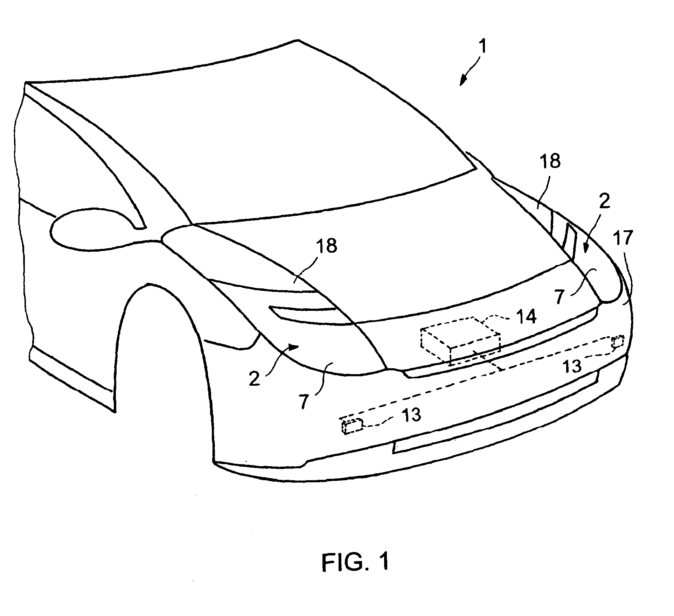

Sur la figure 1 est représenté un véhicule automobile 1 muni de projecteurs 2 éclairants. Chaque projecteur 2 comporte un boîtier 3 monté sur un châssis 4 formé par la structure du véhicule 1.

Le boîtier 3 renferme un certain nombre de composants internes incluant au moins une source lumineuse 5 montée sur un réflecteur 6 propre à diffuser vers l'avant du véhicule 1 la lumière émise par la source 5.

Une glace 7 transparente est montée sur le boîtier 3 qu'elle referme vers l'avant à la manière d'un couvercle et avec lequel elle définit une enceinte 8 dans laquelle sont disposés les composants internes 5, 6 du projecteur 2, composants 5, 6 que la glace 7 vise à protéger.

La glace 7 comporte une paroi avant 9 par laquelle elle transmet vers l'extérieur du véhicule la lumière émise par la source lumineuse 5, cette paroi avant 9 étant prolongée en direction du boîtier 3 par une jupe 10 par laquelle la glace 7 se raccorde au boîtier 3.

En cas de choc avec un obstacle, notamment un piéton, l'on souhaite anticiper le choc afin de limiter les lésions corporelles subies par la personne.

A cet effet, le projecteur 2 comporte un organe d'impact 11, qui est déplaçable entre une position d'utilisation et une position déployée dans laquelle il est susceptible de venir en contact avec l'obstacle lors du choc.

Le projecteur 2 comporte en outre un dispositif de sécurité 12 apte à provoquer au moment opportun, c'est-à-dire immédiatement avant l'impact avec l'obstacle, le déplacement de l'organe d'impact 11 depuis sa position d'utilisation vers sa position déployée.

A cet effet, au moins un détecteur de proximité 13 est prévu au droit de chaque projecteur 2, ce détecteur étant relié à une unité de pilotage 14 qui peut être un calculateur indépendant, comme représenté sur la figure 1, mais qui peut également être un composant ou un sous-programme prévu dans un calculateur déjà affecté à d'autres tâches de gestion électronique du véhicule 1, tel que l'allumage, l'injection, le contrôle de trajectoire, etc.

L'unité de pilotage 14 est reliée au dispositif de sécurité 12 intégré au projecteur 2, afin de commander l'actionnement de celui-ci et le déploiement de l'organe d'impact 11 dès qu'un obstacle a été détecté sur le trajet du projecteur 2.

En outre, le dispositif de sécurité 12 peut comporter des moyens 15 pour permettre le déplacement de l'organe d'impact 11 de sa position déployée vers sa position d'utilisation, afin d'optimiser l'absorption d'énergie lors du choc. Ces moyens 15 seront décrits ultérieurement.

Suivant un premier mode de réalisation, l'organe d'impact 11 comporte la glace 7 du projecteur 2. En l'occurrence, l'organe d'impact est formé par la glace 7. Suivant un deuxième mode de réalisation, qui ne fait pas partie de l'invention, l'organe d'impact 11 comporte à la fois le boîtier 3 et la glace 7 du projecteur 2 (en fait, l'organe d'impact est formé par le boîtier 3 et la glace 7). Suivant un troisième mode de réalisation, qui ne fait pas partie de l'invention, l'organe d'impact 11 comporte ou est formé par un coussin gonflable 16 équipant le projecteur 2 et destiné à se déployer à l'extérieur de celui-ci.

Ces divers modes de réalisation seront décrits successivement avec conservation des références numériques pour les éléments communs.

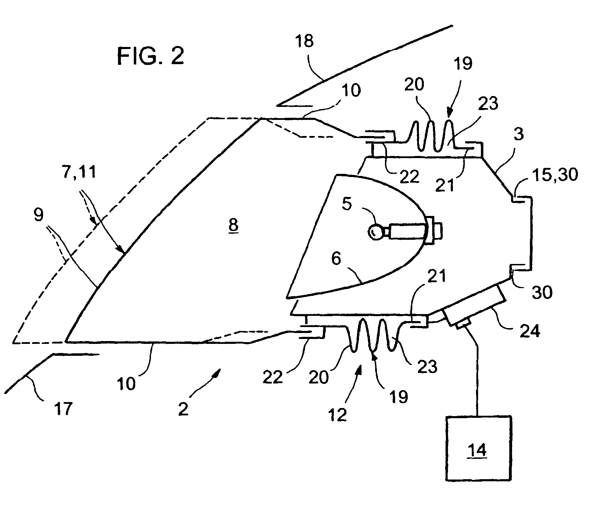

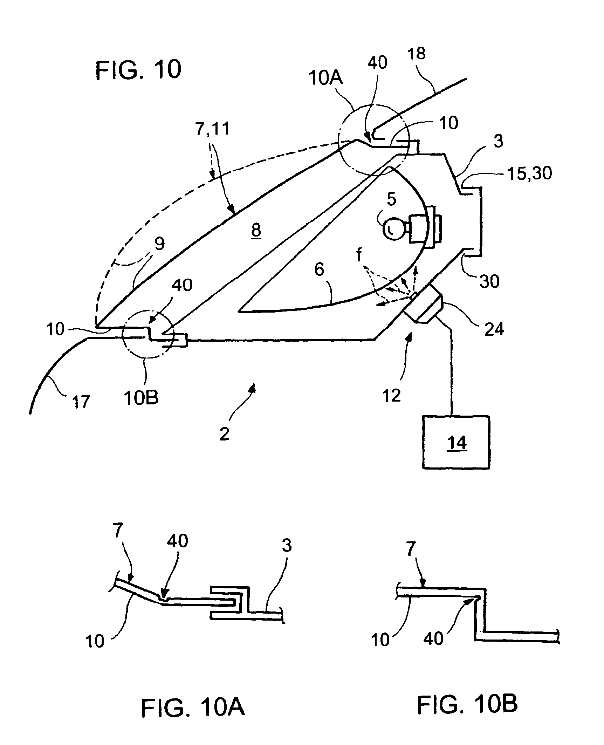

Au premier mode de réalisation correspondent six variantes distinctes d'exécution, illustrées respectivement sur les figures 2 à 5, et sur les figures 10 à 12.

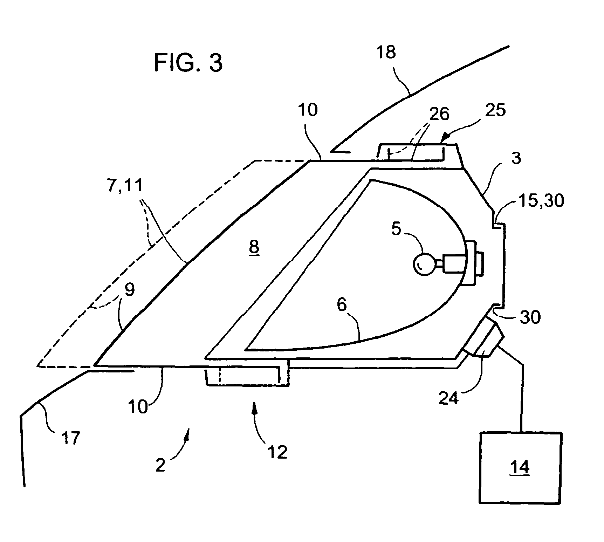

Suivant les deux premières variantes, illustrées respectivement sur les figures 2 et 3, la glace 7 est montée coulissante par rapport au boîtier 3 entre une position d'utilisation, représentée en traits continus sur les figures, position dans laquelle la paroi avant 9 affleure les éléments de carrosserie 17, 18 environnants, et une position déployée, représentée en traits discontinus, dans laquelle la glace 7 fait saillie par rapport aux éléments de carrosserie 17, 18.

Suivant la première variante, illustrée sur la figure 2, le dispositif de sécurité 12 comporte un manchon 19 expansible sur lequel est montée la glace 7, le manchon 19 étant lui-même monté sur le boîtier 3.

Le manchon 19, qui est par exemple réalisé dans un élastomère, présente une portion centrale 20 à soufflets, prolongée d'un côté par une extrémité arrière 21 fixée au boîtier 3, et du côté opposé par une extrémité avant 22 à laquelle est fixée la jupe 10 de la glace 7.

Le manchon 19 définit avec le boîtier 3 une chambre d'expansion 23, tandis que le dispositif de sécurité 12 comporte un réservoir 24 de gaz raccordé, d'une part, électriquement, à l'unité de pilotage 14 et, d'autre part, fluidiquement, à la chambre d'expansion 23.

Dès qu'un obstacle a été détecté par le détecteur 13, l'unité de pilotage 14 actionne l'ouverture du réservoir 24 qui libère son gaz dans la chambre d'expansion 23. La pression du gaz provoque la dilatation de la portion à soufflets 20 et l'expansion du manchon 19 dont l'extrémité avant 22 est propulsée vers l'avant en entraînant la glace 7 vers sa position déployée.

Suivant la deuxième variante, illustrée sur la figure 3, le dispositif de sécurité 12 comporte un vérin 25 solidaire du boîtier 3 et dont le piston 26 est solidaire de la glace 7 (ou inversement). Le vérin 25 peut être une pièce rapportée fixée rigidement au boîtier 3, mais il est en l'occurrence formé directement par une paroi externe du boîtier 3. Quant au piston 26, il est formé, comme cela est visible sur la figure 3, par la jupe 10 de la glace 7.

Le dispositif de sécurité 12 comporte, comme pour la première variante, un réservoir de gaz 24 raccordé électriquement à l'unité de pilotage 14 et fluidiquement au vérin 25.

Dès qu'un obstacle a été détecté par le détecteur 13, l'unité de pilotage 14 actionne l'ouverture du réservoir 24 qui libère son gaz dans le vérin 25. La pression du gaz provoque le déplacement du piston 26 vers l'avant, celui-ci entraînant ainsi la glace 7 vers sa position déployée.

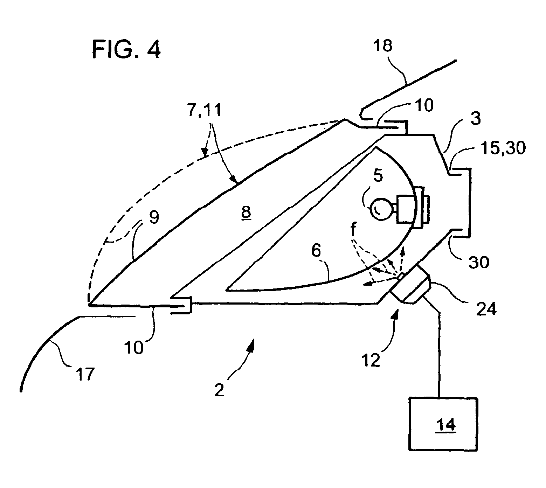

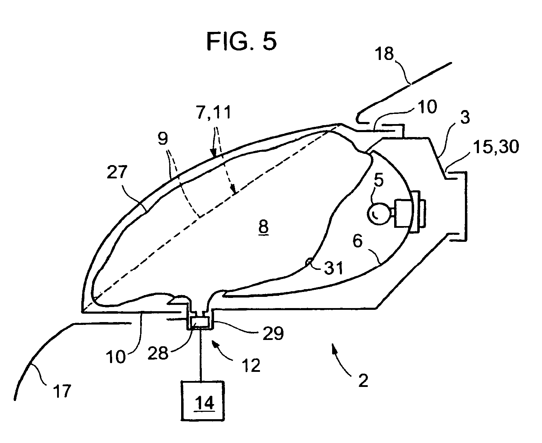

Suivant la troisième et la quatrième variantes, illustrées respectivement sur les figures 4 et 5, la glace 7 est déformable entre une position d'utilisation, représentée en traits continus sur la figure 4 et en traits discontinus sur la figure 5, position dans laquelle la paroi avant 9 affleure les éléments de carrosserie 17, 18 environnants, et une position déployée, représentée en traits discontinus sur la figure 4 et en traits continus sur la figure 5, dans laquelle la paroi avant 9 est bombée pour faire saillie par rapport aux éléments de carrosserie 17, 18.

Suivant la troisième variante, illustrée sur la figure 4, l'enceinte 8 constitue une chambre d'expansion, tandis que le dispositif de sécurité 12 comporte un réservoir de gaz 24 raccordé électriquement à l'unité de pilotage 14 et fluidiquement à la chambre d'expansion 8.

Dès qu'un obstacle a été détecté par le détecteur 13, l'unité de pilotage 14 actionne l'ouverture du réservoir 24 qui libère son gaz dans la chambre d'expansion 8. La libération du gaz est illustrée sur la figure 4 par les flèches f. La pression du gaz provoque le gonflement de la paroi avant 9 de la glace 7 qui occupe ainsi sa position déployée.

Suivant la quatrième variante, illustrée sur la figure 5, le dispositif de sécurité 12 comporte un coussin gonflable 27 susceptible de se déployer dans la chambre d'expansion 8 en venant s'appuyer contre la paroi avant 9 de la glace 7 pour provoquer son gonflement.

En position repliée, le coussin 27 est contenu dans une cartouche 28 fixée au boîtier 3. La cartouche 28 est par exemple reçue dans un logement 29 qui, ménagé dans le boîtier 3, est ouvert vers la chambre d'expansion 8 pour y permettre le déploiement du coussin gonflable 26.

Comme nous l'avons vu, il peut être prévu des moyens 15 pour permettre, et éventuellement contrôler le recul de l'organe d'impact 11.

Ces moyens 15 comportent par exemple un évent de décompression 30 ménagé sur le boîtier, et dont l'ouverture est régulée par l'unité de pilotage 14 pour contrôler la chute de la pression dans l'enceinte 8 et ainsi permettre, en le contrôlant, le recul de la glace 7. Dans le cas de la quatrième variante décrite ci-dessus, on prévoira un évent complémentaire 31 ménagé directement dans le coussin 27.

Les cinquième et sixième variantes sont proches, dans leur principe, respectivement des troisième et quatrième variantes qui viennent d'être décrites. D'ailleurs, les éléments communs portent les mêmes références numériques. Elles s'en distinguent en fait par la présence, sur la glace 7, de zones fusibles.

Ainsi, suivant la cinquième variante, illustrée sur les figures 10, 10A et 10B, la glace est munie d'une ou de plusieurs zones fusibles 40 qui se présentent en l'occurrence sous la forme d'une ou plusieurs rainures 40 ménagées dans la jupe 10, comme cela est représenté sur les figures 10A (où la jupe est représentée dans sa partie supérieure) et 10B (où la jupe est représentée dans sa partie inférieure).

En cas de choc, l'unité de pilotage 14 commande le réservoir 24 qui libère son gaz dans la chambre d'expansion 8. La pression dans la chambre 8 croît en faisant gonfler la glace (comme dans le cas de la troisième variante décrite ci-dessus). Lorsque la pression de gaz atteint une valeur critique prédéterminée, les zones fusibles 40 rompent, provoquant l'éjection de la paroi avant 9 vers l'avant.

Ceci permet notamment d'éviter qu'une surpression dans la chambre d'expansion 8 ne provoque l'éclatement de la glace 7, ce qui pourrait en effet s'avérer dangereux pour le piéton victime du choc.

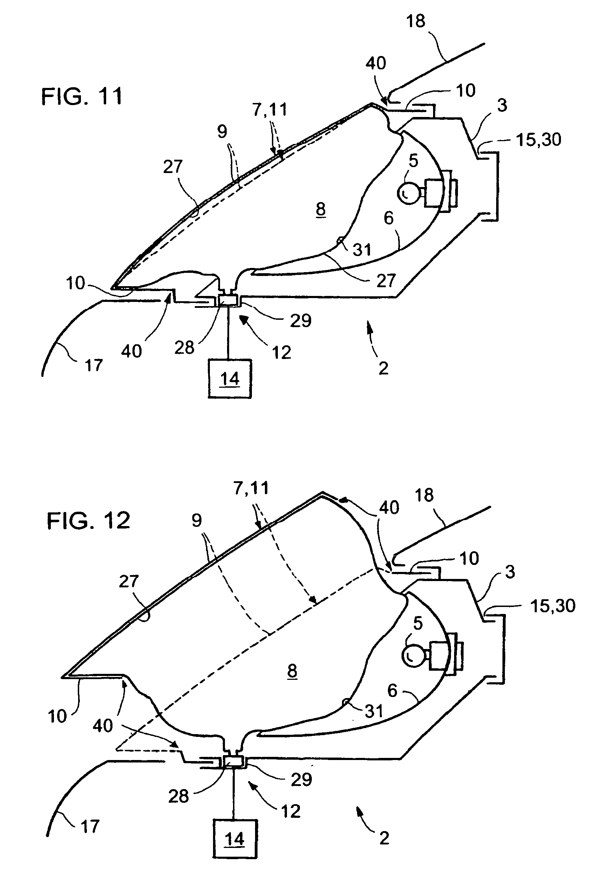

Suivant la sixième variante, illustrée sur les figures 11 et 12, la glace 7 est munie de zones fusibles 40 analogues à celles qui viennent d'être décrites. Ces zones 40 rompent sous la pression exercée par le coussin gonflable 27 lorsque celui-ci a atteint un volume critique au-delà duquel il ne peut plus poursuivre son expansion dans la chambre 8.

De même que dans le cas de la cinquième variante qui vient d'être décrite, la glace 7 est projetée vers l'avant sous la poussée du coussin 27 qui poursuit son expansion à l'extérieur de la chambre 8, ce qui permet d'accroître encore les capacités d'absorption du projecteur tout en évitant l'éclatement de la glace 7.

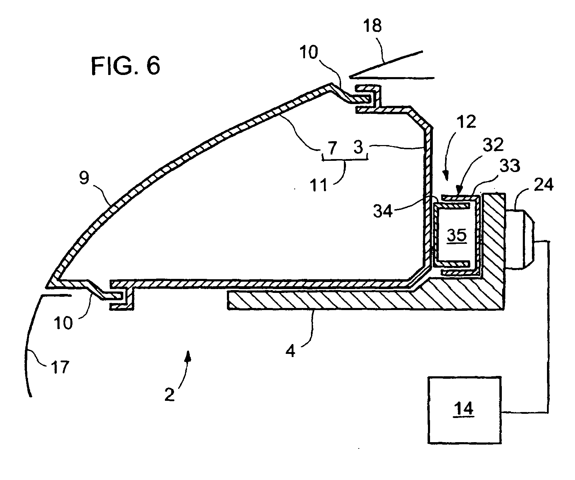

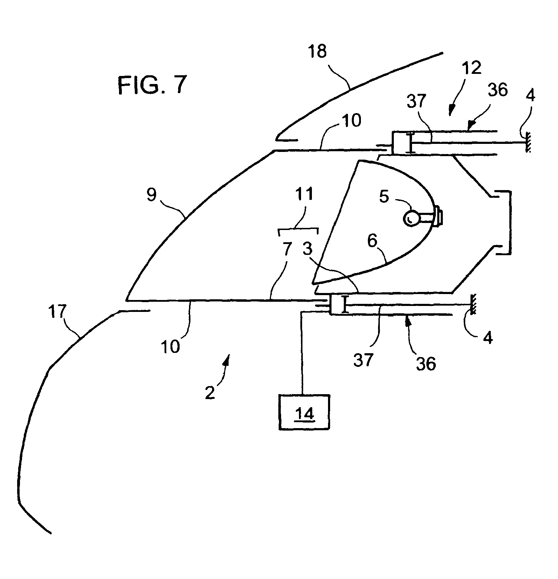

Au deuxième mode de réalisation correspondent deux variantes d'exécution, qui ne font pas partie de la présente invention, illustrées respectivement sur la figure 6 et sur la figure 7. La glace 7 est ici rigidement fixée au boîtier 3, tandis que ce dernier est monté coulissant par rapport au châssis 4.

Suivant une première variante, le dispositif de sécurité 12 comporte une boîte expansible 32 disposée entre le boîtier 3 et le châssis 4, formée de deux éléments emboîtables 33, 34 qui définissent conjointement une chambre d'expansion 35 et dont l'un 33, fixe, est en appui contre le châssis 4, tandis que l'autre 34, mobile, est en appui contre le boîtier 3, et peut coulisser par rapport à l'élément fixe 33.

Le dispositif de sécurité 12 comporte un réservoir de gaz 24 raccordé électriquement à l'unité de pilotage 14 et fluidiquement à la chambre d'expansion 35 au travers de la boîte 32.

Dès qu'un obstacle a été détecté par le détecteur 13, l'unité de pilotage 14 actionne l'ouverture du réservoir 24 qui libère son gaz dans la chambre d'expansion 35. La pression du gaz dans la chambre 35 provoque l'expansion de la boîte 32, l'élément mobile 34 exerçant sur le boîtier 3 une poussée qui provoque son déplacement par rapport au châssis 4, l'élément mobile 34 entraînant ainsi l'organe d'impact 11 - c'est-à-dire, en l'occurrence, l'ensemble formé par le boîtier 3 et la glace 7 - vers sa position déployée.

Suivant une seconde variante, le dispositif de sécurité 12 comporte un vérin 36 solidaire du boîtier 3 et dont le piston 37 est solidaire du châssis 4 (ou inversement). Le dispositif de sécurité 12 comporte également un réservoir de gaz 24 raccordé électriquement à l'unité de pilotage 14 et fluidiquement au vérin 36.

Dès qu'un obstacle a été détecté par le détecteur 13, l'unité de pilotage 14 actionne l'ouverture du réservoir 24 qui libère son gaz dans le vérin 36, ce dernier entraînant le boîtier 3 vers sa position déployée.

Afin de permettre, en le contrôlant, le recul de l'organe d'impact 11, il est possible de munir le vérin 36 d'une vanne dont l'ouverture est régulée par l'unité de pilotage 14. Suivant le troisième mode de réalisation, qui ne fait pas partie de l'invention, l'organe d'impact 11 est formé, comme nous l'avons vu, par un coussin gonflable 16 intégré au projecteur 2. Le coussin 16 est en l'occurrence reçu, en position repliée, dans une cartouche 38 fixée au boîtier 3 et recouverte par une paroi 39 fusible ou amovible sous la force exercée par le coussin 16 lors de son déploiement.

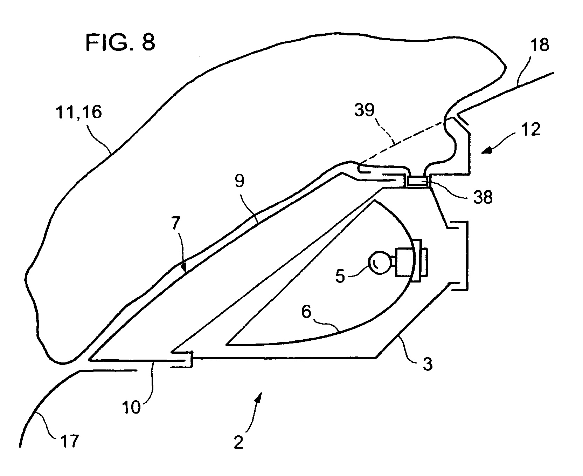

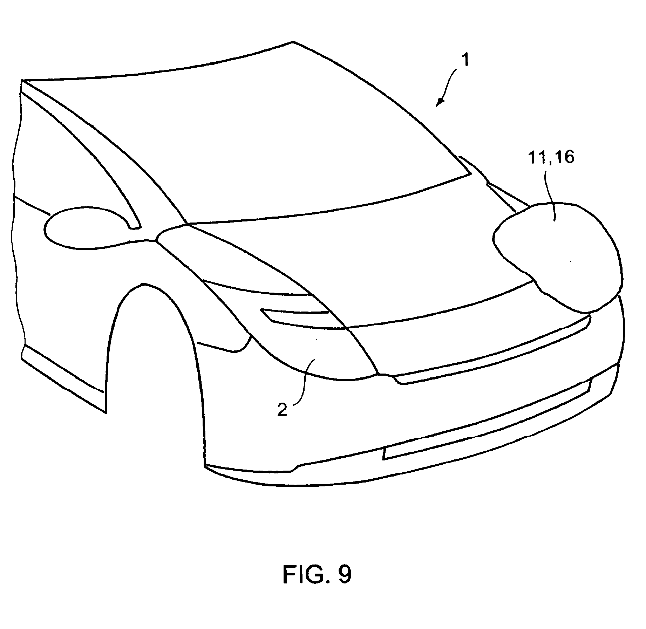

La cartouche 38 est reliée à l'unité de pilotage 14 qui provoque le déploiement du coussin 16 à l'extérieur du projecteur 2 dès qu'un obstacle a été détecté par le détecteur 13. Comme cela est visible sur les figures 8 et 9, le coussin 16 est préformé pour pouvoir recouvrir au moins partiellement la paroi avant 9 de la glace 7 en position déployée et ainsi amortir le choc de l'obstacle contre le projecteur 2. En l'occurrence, le coussin 16 recouvre la paroi avant 9 en totalité, ce qui garantit une sécurité uniforme quelle que soit la localisation de l'impact.

De plus, afin de contrôler l'amortissement de l'obstacle lors du choc, il est possible de munir le coussin 16 d'un ou plusieurs évents 31 de décompression.

Ainsi, quel que soit le mode de réalisation retenu, il est possible d'anticiper le choc avec l'obstacle. L'organe d'impact 11 se déployant vers l'avant, il dispose d'une course de recul relativement importante lorsque l'obstacle vient le heurter, sans que cette course n'empiète sur l'espace réservé aux organes fonctionnels (batterie, filtre à air, réservoir de liquide lave-glace, etc.) disposés habituellement derrière le projecteur.

Il en résulte pour le projecteur 2 des capacités accrues d'absorption de l'énergie du choc, surtout si des moyens 15 sont prévus pour permettre, de préférence en le contrôlant, le recul de l'organe d'impact 11. Il est en outre possible, notamment à vitesse réduite, d'éviter qu'un piéton ne vienne heurter les éléments de carrosserie 17, 18 environnants.

De plus, il est à noter que les divers modes de réalisation décrits ne nécessitent pas de revoir de fond en comble la conception des projecteurs. La sécurité des piétons est donc assurée sans engendrer de surcoût prohibitif. L'invention a donc pour objet un projecteur conçu pour amortir le choc en cas d'impact d'un piéton contre le projecteur, et notamment apte à remplir les conditions du projet de directive européenne n° 70/156/EEC concernant le choc piéton.

## Revendications

1. Projecteur de véhicule automobile comportant,
- d'une part, un organe d'impact (11) déplaçable entre une position d'utilisation et une position déployée dans laquelle il est susceptible de venir en contact avec un obstacle en cas de choc de celui-ci avec le projecteur (2),
- et, d'autre part, un dispositif de sécurité (12) apte à provoquer le déplacement de l'organe d'impact (11) depuis sa position d'utilisation vers sa position déployée
le projecteur (2) comportant un boîtier (3) renfermant au moins une source lumineuse (5) et sur lequel est montée une glace (7) de protection apte à transmettre la lumière émise par la source (5), **caractérisé en ce que** l'organe d'impact (11) comporte la glace (7), la glace (7) étant montée mobile par rapport au boîtier (3), et le dispositif de sécurité (12) étant apte à provoquer le déplacement de la glace (7) par rapport au boîtier (3).

2. Projecteur selon la revendication 1, **caractérisé en ce que** le dispositif de sécurité (12) comporte des moyens (15) pour permettre le déplacement de l'organe d'impact (11) de sa position déployée vers sa position d'utilisation.

3. Projecteur selon la revendication 1 ou 2, **caractérisé en ce que** le dispositif de sécurité (12) comporte des moyens pour maîtriser le déplacement de l'organe d'impact (11) de sa position d'utilisation vers sa position déployée.

4. Projecteur selon l'une des revendications précédentes, **caractérisé en ce que** le dispositif de sécurité (12) comporte un manchon (19) expansible sur lequel est montée la glace (7), le manchon (19) étant monté sur le boîtier (3) et définissant avec celui-ci une chambre d'expansion (23), le dispositif de sécurité (12) comportant en outre un réservoir de gaz (24) raccordé à la chambre d'expansion (23) et susceptible d'y libérer son gaz pour provoquer l'expansion du manchon (19) et le déplacement de la glace (7) par rapport au boîtier (3).

5. Projecteur selon l'une des revendications 1 à 3, **caractérisé en ce que** le dispositif de sécurité (12) comporte, d'une part, un vérin (25) solidaire du boîtier (3) et dont le piston (26) est solidaire de la glace (7), et, d'autre part, un réservoir de gaz (24) raccordé au vérin (25) et susceptible d'y libérer son gaz pour provoquer le déplacement de la glace (7) par rapport au boîtier (3).

6. Projecteur selon l'une des revendications 1 ou 2, **caractérisé en ce que** la glace (7) est déformable et définit, conjointement avec le boîtier (3), une chambre d'expansion (8), et **en ce que** le dispositif de sécurité (12) comporte un réservoir de gaz (24), raccordé à la chambre d'expansion (8), et susceptible d'y libérer son gaz pour gonfler la glace (7).

7. Projecteur selon l'une des revendications précédentes, **caractérisé en ce que** le boîtier (3) est muni d'un évent (30) de décompression dont l'ouverture est régulée pour permettre le déplacement de la glace (7) de sa position déployée vers sa position d'utilisation.

8. Projecteur selon l'une des revendications 1 ou 2, **caractérisé en ce que** la glace (7) est déformable et définit conjointement avec le boîtier une enceinte (8), et **en ce que** le dispositif de sécurité (12) comporte un coussin gonflable (27) susceptible de se déployer dans cette enceinte (8) pour gonfler la glace (7).

9. Projecteur de véhicule automobile (2) comportant un boîtier (3) renfermant au moins une source lumineuse (5) et sur lequel est montée une glace (7) de protection apte à transmettre la lumière émise par la source (5), **caractérisé en ce que** ledit projecteur comporte :
- d'une part, un organe d'impact (11) comportant la glace (7) déformable entre une position d'utilisation et une position déployée dans laquelle elle est susceptible de venir en contact avec un obstacle en cas de choc de celui-ci avec le projecteur (2),
- et, d'autre part, un dispositif de sécurité (12) apte à provoquer la déformation de la glace (7) depuis sa position d'utilisation vers sa position déployée.

10. Projecteur selon la revendication précédente, **caractérisé en ce que** la glace (7) définit conjointement avec le boîtier (3) une chambre d'expansion, le dispositif de sécurité (12) comprenant un réservoir de gaz (24) raccordé à la chambre d'expansion et susceptible d'y libérer son gaz pour gonfler la glace (7).

11. Projecteur selon la revendication 9, **caractérisé en ce que** la glace définit conjointement avec le boîtier (3) une enceinte, le dispositif de sécurité (12) comportant un coussin gonflable susceptible de se déployer dans cette enceinte pour gonfler la glace (7).

12. Projecteur selon l'une des revendications 9 à 11, **caractérisé en ce que** la glace est munie de zones fusibles (40), notamment destinées à provoquer l'éjection de la glace (7) au-delà d'une pression donnée dans l'enceinte.

13. Projecteur selon l'une des revendications précédentes, **caractérisé en ce qu'**il est conçu pour amortir le choc en cas d'impact d'un piéton contre le projecteur.

## Claims

1. Motor vehicle headlight, comprising
- firstly an impact member (11) able to move between a position of use and a deployed position in which it is able to come into contact with an obstacle in the event of impact of the latter with the headlight (2),
- and secondly a safety device (12) able to cause the movement of the impact member (11) from its position of use to its deployed position,
the headlight (2) comprising a housing (3) enclosing at least one light source (5) and on which there is mounted a protective lens (7) able to transmit the light emitted by the source (5), **characterised in that** the impact member (11) comprises a lens (7), the lens (7) being mounted so as to move with respect to the housing (3), and the safety device (12) being able to cause the movement of the lens (7) with respect to the housing (3).

2. Headlight according to claim 1, **characterised in that** the safety device (12) comprises means (15) for allowing the movement of the impact member (11) from its deployed position to its position of use.

3. Headlight according to claim 1 or 2, **characterised in that** the safety device (12) comprises means for controlling the movement of the impact member (11) from its position of use to its deployed position.

4. Headlight according to one of the preceding claims, **characterised in that** the safety device (12) comprises an expansible sleeve (19) on which the lens (7) is mounted, the sleeve (19) being mounted on the housing (3) and defining therewith an expansion chamber (27), the safety device (12) also comprising a gas reservoir (24) connected to the expansion chamber (23) and able to release its gas therein in order to cause the expansion of the sleeve (19) and the movement of the lens (7) with respect to the housing (3).

5. Headlight according to one of claims 1 to 3, **characterised in that** the safety device (12) comprises firstly a cylinder (25) fixed to the housing (3) and whose piston (26) is fixed to the lens (7), and secondly a gas reservoir (24) connected to the cylinder (25) and able to release its gas therein in order to cause the movement of the lens (7) with respect to the housing (3).

6. Headlight according to one of claim 1 or 2, **characterised in that** the lens (7) is deformable and conjointly with the housing (3) defines an expansion chamber (8), and **in that** the safety device (12) comprises a gas reservoir (24) connected to the expansion chamber (8) and able to release its gas therein in order to inflate the lens (7).

7. Headlight according to one of the preceding claims, **characterised in that** the housing (3) is provided with a decompression vent (30) whose opening is regulated so as to allow the movement of the lens (7) from its deployed position to its position of use.

8. Headlight according to one of claims 1 or 2, **characterised in that** the lens (7) is deformable and defines an enclosure (8) conjointly with the housing, and **in that** the safety device (12) comprises an inflatable cushion (27) able to be deployed in this enclosure (8) in order to inflate the lens (7).

9. Motor vehicle headlight (2) comprising a housing (3) enclosing at least one light source (5) and on which there is mounted a protective lens (7) able to transmit the light emitted by the source (5), **characterised in that** the said headlight comprises:
- firstly an impact member (11) comprising the lens (7) deformable between a position of use and a deployed position in which it is able to come into contact with an obstacle in the event of impact of the latter with the headlight (2),
- and secondly a safety device (12) able to cause the deformation of the lens (7) from its position of use to its deployed position.

10. Headlight according to the preceding claim, **characterised in that** the lens (7) defines an expansion chamber conjointly with the housing (3), the safety device (12) comprising a gas reservoir (24) connected to the expansion chamber and able to release its gas therein in order to inflate the lens (7).

11. Headlight according to claim 9, **characterised in that** the lens defines an enclosure conjointly with the housing (3), the safety device (12) comprising an inflatable cushion able to be deployed in this enclosure in order to inflate the lens (7).

12. Headlight according to one of claims 9 to 11, **characterised in that** the lens is provided with fusible areas (40), in particular intended to cause the ejection of the lens (7) beyond a given pressure in the enclosure.

13. Headlight according to one of the preceding claims, **characterised in that** it is designed to damp the shock in the event of impact of a pedestrian against the headlight.

## Patentansprüche

1. Kraftfahrzeugscheinwerfer mit
- einerseits einem Aufprallelement (11), das zwischen einer Benutzungsstellung und einer ausgefahrenen Stellung verschiebbar ist, in der es mit einem Hindernis bei dessen Aufprall auf den Scheinwerfer (2) in Kontakt zu kommen vermag,
- und andererseits einer Sicherheitsvorrichtung (12), die das Verschieben des Aufprallelements (11) aus seiner Benutzungsstellung in seine ausgefahrene Stellung zu bewirken vermag,
wobei der Scheinwerfer (2) ein Gehäuse (3) umfasst, das wenigstens eine Lichtquelle (5) umgibt und auf dem eine Schutzscheibe (7) angebracht ist, die das von der Lichtquelle (5) abgegebene Licht zu übertragen vermag,
**dadurch gekennzeichnet, dass** das Aufprallelement (11) die Scheibe (7) umfasst,
wobei die Scheibe (7) bezüglich des Gehäuses (3) beweglich ist, und wobei die Sicherheitsvorrichtung (12) das Verschieben der Scheibe (7) bezüglich des Gehäuses (3) zu bewirken vermag.

2. Scheinwerfer nach Anspruch 1,
**dadurch gekennzeichnet, dass** die Sicherheitsvorrichtung (12) Mittel (15) umfasst, um das Verschieben des Aufprallelements (11) aus seiner ausgefahrenen Stellung in seine Benutzungsstellung zu ermöglichen.

3. Scheinwerfer nach Anspruch 1 oder 2,
**dadurch gekennzeichnet, dass** die Sicherheitsvorrichtung (12) Mittel umfasst, um das Verschieben des Aufprallelements (11) aus seiner Benutzungsstellung in seine ausgefahrene Stellung zu kontrollieren.

4. Scheinwerfer nach einem der vorhergehenden Ansprüche,
**dadurch gekennzeichnet, dass** die Sicherheitsvorrichtung (12) eine expandierbare Muffe (19) umfasst, auf der die Scheibe (7) angebracht ist, wobei die Muffe (19) auf dem Gehäuse (3) angebracht ist und mit diesem eine Expansionskammer (23) bildet,
wobei die Sicherheitsvorrichtung (12) ferner einen Gasbehälter (24) umfasst, der mit der Expansionskammer (23) verbunden ist und sein Gas in diese zu entlassen vermag, um das Expandieren der Muffe (19) und das Verschieben der Scheibe (7) bezüglich des Gehäuses (3) zu bewirken.

5. Scheinwerfer nach einem der Ansprüche 1 bis 3,
**dadurch gekennzeichnet, dass** die Sicherheitsvorrichtung (12) einerseits einen mit dem Gehäuse (3) fest verbundenen Zylinder (25) umfasst, dessen Kolben (26) fest mit der Scheibe (7) verbunden ist, und andererseits einen Gasbehälter (24), der mit dem Zylinder (25) verbunden ist und sein Gas in diesen zu entlassen vermag, um das Verschieben der Scheibe (7) bezüglich des Gehäuses (3) zu bewirken.

6. Scheinwerfer nach einem der Ansprüche 1 oder 2,
**dadurch gekennzeichnet, dass** die Scheibe (7) verformbar ist und zusammen mit dem Gehäuse (3) eine Expansionskammer (8) bildet, und dass die Sicherheitsvorrichtung (12) einen Gasbehälter (24) umfasst, der mit der Expansionskammer (8) verbunden ist und sein Gas in diese zu entlassen vermag, um die Scheibe (7) aufzublasen.

7. Scheinwerfer nach einem der vorhergehenden Ansprüche,
**dadurch gekennzeichnet, dass** das Gehäuse (3) mit einem Dekompressions-Abzug (30) versehen ist, dessen Öffnung reguliert wird, um das Verschieben der Scheibe (7) aus ihrer ausgefahrenen Stellung in ihre Benutzungsstellung zu ermöglichen.

8. Scheinwerfer nach einem der Ansprüche 1 oder 2,
**dadurch gekennzeichnet, dass** die Scheibe (7) verformbar ist und zusammen mit dem Gehäuse einen Raum (8) bildet, und dass die Sicherheitsvorrichtung (12) einen Airbag (27) umfasst, der sich in diesem Raum (8) zu entfalten vermag, um die Scheibe (7) aufzublasen.

9. Kraftfahrzeugscheinwerfer (2) mit einem Gehäuse (3), das wenigstens eine Lichtquelle (5) umgibt und auf dem eine Schutzscheibe (7) angebracht ist, die das von der Lichtquelle (5) abgegebene Licht zu übertragen vermag,
**dadurch gekennzeichnet, dass** der Scheinwerfer umfasst:
- einerseits ein Aufprallelement (11), das die Scheibe (7) umfasst, die zwischen einer Benutzungsstellung und einer ausgefahrenen Stellung verformbar ist, in der sie mit einem Hindernis bei dessen Aufprall auf den Scheinwerfer (2) in Kontakt zu kommen vermag,
- und andererseits eine Sicherheitsvorrichtung (12), die das Verformen der Scheibe (7) aus ihrer Benutzungsstellung in ihre ausgefahrene Stellung zu bewirken vermag.

10. Scheinwerfer nach dem vorhergehenden Anspruch,
**dadurch gekennzeichnet, dass** die Scheibe (7) zusammen mit dem Gehäuse (3) eine Expansionskammer bildet, wobei die Sicherheitsvorrichtung (12) einen Gasbehälter (24) umfasst, der mit der Expansionskammer verbunden ist und sein Gas in diese zu entlassen vermag, um die Scheibe (7) aufzublasen.

11. Scheinwerfer nach Anspruch 9,
**dadurch gekennzeichnet, dass** die Scheibe zusammen mit dem Gehäuse (3) einen Raum bildet, wobei die Sicherheitsvorrichtung (12) einen Airbag umfasst, der sich in diesem Raum zu entfalten vermag, um die Scheibe aufzublasen (7).

12. Scheinwerfer nach einem der Ansprüche 9 bis 11,
**dadurch gekennzeichnet, dass** die Scheibe mit Sollbruchstellen (40) versehen ist, die insbesondere dazu bestimmt sind, ab einem gegebenen Druck in dem Raum das Ausstoßen der Scheibe (7) zu bewirken.

13. Scheinwerfer nach einem der vorhergehenden Ansprüche,
**dadurch gekennzeichnet, dass** er konzipiert ist, um bei einer Kollision mit einem Fußgänger den Aufprall auf den Scheinwerfer zu dämpfen.
